# FASCICULE DE BREVET EUROPEEN

(11) **EP 2 152 493 B1**
(45) Date de publication et mention de la délivrance du brevet: **01.08.2012**
(21) Numéro de dépôt: 08736080.6
(22) Date de dépôt: 10.04.2008
(51) Int. Cl.: B29C 47/08, B29C 47/12, B29D 30/16, B29D 30/30, B29D 30/60

(54) **Buse articulee et procede d'application d'une bandelette en materiau viscoelastique qui utilise ladite buse**
Angelenkte Düse und Verfahren zum Auftragen eines Streifens aus viskoelastischem Material unter Verwendung der Düse
Articulated nozzle and method of applying a strip of viscoelastic material using said nozzle

(30) Priorité: 11.05.2007 FR 0703434
(43) Date de publication de la demande: 17.02.2010
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: DELORME, Jean-Claude, F-63730 Mirefleurs (FR); OUGIER, Christophe, F-63450 Le Crest (FR)
(74) Mandataire: Reynaud, Georges
(86) Numéro de dépôt international: PCT/EP2008/054360
(87) Numéro de publication internationale: WO 2008/141871

(56) Documents cités:
- EP-A- 0 264 600
- EP-A- 1 749 648
- WO-A-2006/035263
- US-A- 3 940 226
- US-A- 5 342 473

## Description

L'invention concerne le domaine de la fabrication des produits à base de matériau viscoélastiques tels que des matériaux plastiques ou élastomériques.

Plus particulièrement, l'invention s'intéresse au domaine de la pose de profilés sous forme de bandelettes superposées les unes sur les autres selon un pas et un taux de recouvrement déterminés en fonction du profil final que l'on cherche à obtenir.

Typiquement, ce type de pose bien connu est utilisé dans la fabrication d'une ébauche de pneumatique, au cours de laquelle on enroule une bandelette d'un produit de nature caoutchoutique autour d'une surface de réception de forme cylindrique ou toroïdale, selon un pas bien précis, de manière à former, par superposition des couches de bandelettes d'une même qualité, un profilé de gomme d'une qualité donnée et disposé de manière précise en fonction de la place occupée par ce profilé dans le pneumatique.

Les moyens d'assemblage et les dispositifs connus comprennent en règle générale trois types de moyens fonctionnant en collaboration les uns avec les autres :
- une surface de réception,
- un moyen d'alimentation permettant de générer une bandelette selon une géométrie définie,
- un moyen d'application de la bandelette sur une surface de réception et,
- un moyen de pilotage des déplacements du moyen d'application par rapport à la surface de réception.

A titre d'exemple, les dispositifs décrits dans les publications EP 268 544 ou encore dans la publication EP 264 600 divulguent l'ensemble des moyens évoqués ci-dessus.

Les dispositifs de ce type permettent de s'affranchir des étapes de fabrication desdits profilés, lesquelles s'effectuent généralement à partir de moyens de fabrication centralisés. En effet, la bandelette est produite à la demande au moment de l'assemblage. Pour un profil de bandelette donné, le profil définitif déposé sur la surface de réception dépend seulement de l'algorithme utilisé pour piloter le moyen d'application et de la section de la bandelette. Aussi, la souplesse d'utilisation de ces procédés est à l'origine de leur grande diffusion.

La mise en oeuvre de ce type de procédé repose essentiellement sur la qualité du moyen de génération de la bandelette. Il importe en effet que la section de la bandelette soit aussi proche que possible de la référence désirée, de manière à ce que la quantité de matériau déposé corresponde précisément à la quantité attendue.

A cet effet, il a été développé des moyens de génération de profilés de gomme permettant de fournir un débit rigoureusement constant. Ce type de moyen est décrit à titre d'exemple dans la publication EP 0 400 496 A 1 de la demanderesse.

D'autre part, la forme du profil doit être judicieusement choisie pour permettre une mise en joint aussi parfaite que possible des couches de bandelettes les unes avec les autres, dans le but d'éviter, autant que faire se peut, l'inclusion d'air entre les couches de bandelettes dont la présence serait préjudiciable à la résistance du pneumatique au cours de son utilisation.

Aussi, il a été proposé de réaliser des bandelettes de section sensiblement lenticulaires de manière à éviter les effets de bord.

Le document EP 1749648-A décrit un dispositif d'application d'un matériau viscoélastique sur une surface de réception, comme défini dans le préambule de la revendication 1 du présent brevet.

De plus, pour que la qualité de dépose de la bandelette soit optimale, et pour faciliter l'application et la mise en joint de la bandelette sur la surface de réception, il importe que le moyen d'application soit disposé au plus près de la surface de réception.

A cet effet, les dispositifs connus disposent de moyens permettant d'approcher de la surface de réception l'ensemble composé des moyens d'alimentation qui sont solidaires des moyens d'application. La masse de l'ensemble de ces moyens est relativement élevée. Il en résulte qu'il s'avère difficile de piloter de manière fine et précise la position du moyen d'application par rapport à la surface de réception, de sorte que le moyen d'application puisse épouser toutes les irrégularités de la surface de réception. Aussi, de manière connue, il est proposé de disposer un rouleau d'application en aval du moyen d'application. Un dispositif de ce type est divulgué à titre d'exemple dans la publication EP 264 600 déjà évoquée ci-dessus. Ce rouleau d'application exerce une pression contrôlée au point de mise en contact de la bandelette sur la surface de réception.

Toutefois on observe que ce rouleau, qui est en règle générale embarqué sur le moyen d'application, représente une source de problèmes. Il arrive en effet que la bandelette adhère à la surface du rouleau, ou s'échappe dans l'espace libre compris entre le moyen d'application et le rouleau, ce qui entraîne une déformation voire une rupture de la bandelette, ainsi que des interruptions du cycle de fabrication.

L'invention a pour objet de supprimer ces inconvénients.

Selon l'invention, le dispositif d'application d'une bandelette d'un matériau viscoélastique sur une surface de réception en mouvement relatif par rapport au dit dispositif comprend, comme défini dans la revendication 1, une buse d'application et un moyen d'alimentation. La buse d'application comporte un corps dans lequel débouche le moyen d'alimentation et une tête à l'extrémité de laquelle est disposé un orifice de sortie.

Ce dispositif se caractérise en ce que la tête de la buse d'application est reliée au corps de la buse par l'intermédiaire d'une articulation déformable selon un axe sensiblement parallèle à la surface de réception et perpendiculaire à la direction d'application de la bandelette.

L'invention concerne également le procédé de mise en oeuvre du dispositif décrit ci-dessus, comme défini dans la revendication 7. Des formes préférentielles de l'invention sont définies dans les revendications dépendantes.

Ainsi, en disposant une articulation entre la tête et le corps de la buse, et en raison de la très faible masse de ladite tête il est possible de faire en sorte que la tête de la buse suive de manière quasi instantanée les irrégularités de la surface de réception.

A cet effet on peut utilement exercer une force directement sur la tête de la buse de manière à appliquer l'orifice de sortie contre la surface de réception en mouvement, de sorte que le matériau est déposé directement sur la surface de réception à sa sortie de l'orifice sans qu'il soit besoin de placer un rouleau d'application de la bandelette sur la surface de réception.

Le moyen d'alimentation peut être un moyen du type outil d'extrusion à vis dont les conditions de débit et de pression sont adaptées ou, de manière préférentielle, un moyen d'alimentation de type volumétrique, apte à délivrer le matériau à un débit volumétrique déterminé et constant.

La description qui suit s'appuie sur un mode de réalisation de l'invention et sur les figures 1 à 6 dans lesquelles :
- La figure 1 représente une vue schématique d'un dispositif selon l'art antérieur connu,
- La figure 2 représente une vue schématique de dessus d'une buse d'application conforme à l'invention,
- la figure 3 représente une vue schématique en coupe transversale selon C-C d'une buse selon l'invention,
- la figure 4 représente une vue schématique en coupe transversale d'un profilé déposé sur une surface de réception, et formé par une superposition de bandelettes.
- Les figures 5 et 6 représentent une forme particulière du profil de la tête de la buse au niveau de l'orifice de sortie.

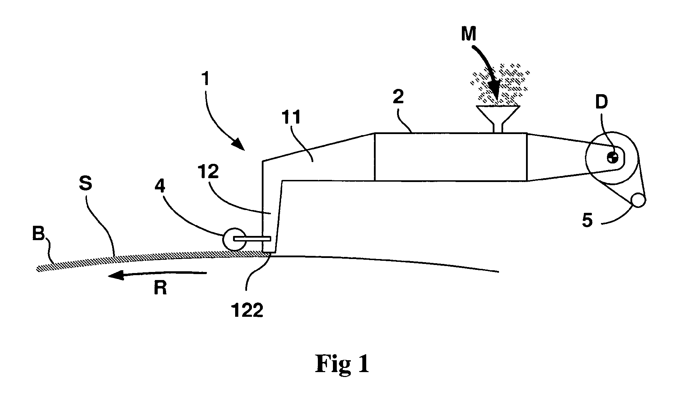

Le dispositif selon l'art antérieur connu représenté de manière schématique sur la figure 1 comprend un moyen d'alimentation 2 dans lequel on introduit le matériau viscoélastique M de manière à alimenter une buse 1 avec un débit et une pression d'alimentation donnée. La surface de réception S est en mouvement par rapport au dispositif d'application selon une direction R. Le mélange déposé sur la surface de réception forme une bandelette B. Un rouleau d'application 4 peut être disposé en aval de l'orifice 122 de sortie du matériau. Dans ce dispositif, la buse et le moyen d'alimentation forment un ensemble solidaire et mobile autour d'un axe C sous l'action d'un moyen motorisé 5.

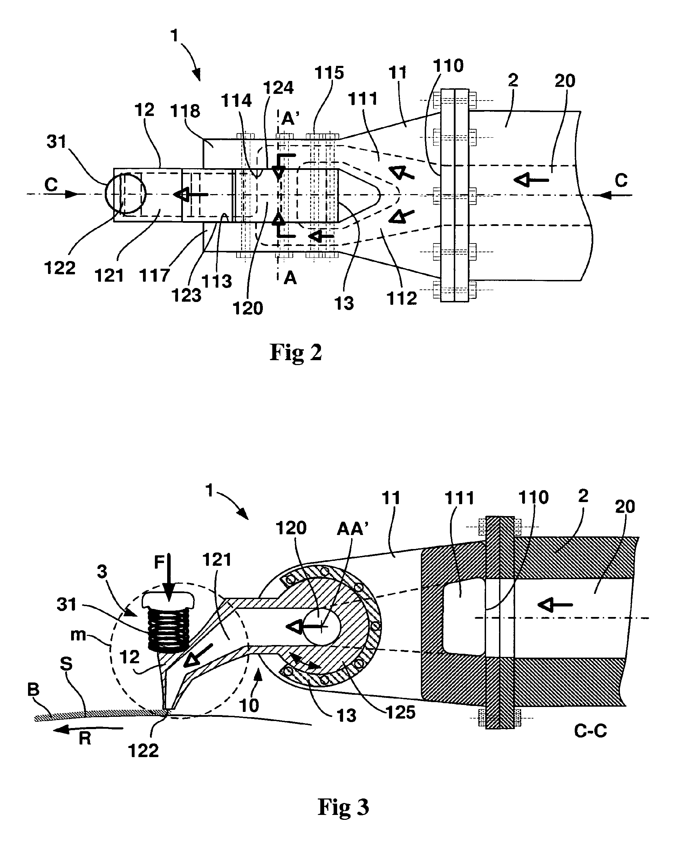

Le dispositif d'application illustré sur les figures 2 et 3 comprend un moyen d'alimentation 2 (non représenté) dont le canal de sortie 20 débouche dans l'entrée 110 du corps 11 de la buse d'application 1.

Selon le mode préférentiel de mise en oeuvre de l'invention, le corps 11 de la buse 1 se divise en deux branches, respectivement 117 et 118, traversées par les canaux d'alimentation, respectivement 111 et 112. L'articulation 10 de la tête 12 par rapport au corps de la buse 11 est placée entre les deux branches 117 et 118 du corps 11 de la buse 1.

L'articulation 10 de la tête 12 comprend un moyeu cylindrique 125 monté à rotation dans une bride semi circulaire 13, maintenue fixe par rapport au corps 11. La bride semi circulaire 13 et la tête d'application 12 sont montés entre les deux branches 117 et 118 du corps 11 de la buse 1, de telle sorte que la tête 12 de la buse 1, guidée par la bride semi-circulaire 13, tourne librement autour d'un axe AA' sensiblement parallèle au plan formé par la surface de réception, et perpendiculaire à la direction de progression R. La tête 12 de la buse 1 peut tourner sur la portion angulaire correspondant à la partie évidée de la bride 13.

Les deux faces planes latérales, respectivement 123 et 124, du moyeu cylindrique 125, forment un contact étanche avec les deux surfaces planes intérieures, respectivement 113 et 114 des deux branches respectivement 117 et 118 du corps 11.

Des vis de serrage 115 assurent le maintien des pièces et la pression entre les faces planes du moyeu (123, 124) et les surfaces planes internes (123, 124) des branches (117, 118) du corps 11.

L'étanchéité dynamique entre les surfaces du moyeu (123, 124) et les surfaces internes des branches (113, 114) du corps 11 est assurée par un système à glaces, dans lequel les états de surfaces ont été adaptés et correspondent aux jeux et aux états de surfaces couramment utilisés en mécanique générale.

Les canaux 111 et 112 débouchent respectivement aux deux extrémités d'un canal de forme sensiblement cylindrique 120, dont l'axe est aligné avec l'axe AA' de rotation du moyeu 125 de la tête d'application 12 dans la bride semi circulaire 13.

La tête de la buse comporte un canal intérieur 121, permettant de mettre en communication le canal 120, et l'orifice 122 placé à l'extrémité de la tête de la buse. L'orifice 122 a une forme allongée dans le sens transversal à la direction du mouvement relatif R entre la surface de réception S et le dispositif d'application.

Le sens de circulation du matériau viscoélastique à l'intérieur de la buse 1 est repéré par les flèches à pointes ajourées.

Un moyen 3 permet d'exercer une force F sur la tête 12 de la buse 1, de manière à forcer l'orifice 122 à venir au contact de la surface de réception S en faisant tourner la tête 12 autour de l'axe AA'. En raison de son poids très faible, la tête reste ainsi en contact avec la surface de réception quelles que soient les irrégularités de cette surface. Il s'en suit que la bandelette B déposée sur la surface de réception est appliquée directement par les lèvres de l'orifice de sortie 122.

Le moyen permettant d'appliquer la force F sur la tête de la buse peut être indistinctement un ressort, ou encore un vérin à pression pilotée ou tout autre moyen équivalent. On veillera néanmoins à ce que l'inertie de l'ensemble ne soit pas trop importante pour les raisons évoquées ci-dessus.

En pratique la force d'application est relativement modeste, et se situe dans une plage de l'ordre de 100 à 500 N, lorsque le matériau utilisé est du caoutchouc.

Le montage de la forme préférentielle de mise en oeuvre de l'invention décrit ci-dessus, et présenté sur les figures 2 et 3, est proposé ici à titre exemplatif, et s'illustre par sa compacité, sa légèreté et sa facilité d'assemblage. D'autres montages, tout aussi performants, peuvent être réalisés par l'homme du métier en disposant par exemple l'articulation sur une des faces latérales du corps 11 de la buse ce qui permet d'éviter la séparation du flux au sein du corps de la buse. De même, il est possible de pratiquer des lumières dans la partie arrière du moyeu afin de mettre en communication directe les canaux intérieurs du corps 11 de la buse et de la tête 12.

Comme cela a été évoqué ci-dessus le dispositif selon l'invention permet d'appliquer la bandelette sur la surface de réception sans qu'il soit nécessaire d'utiliser un rouleau d'application placé en aval de la buse.

On observe en effet que la pression dynamique exercée par le matériau viscoélastique sur la surface de réception S dépend essentiellement de sa vitesse de sortie de l'orifice 122, de la distance séparant l'orifice de sortie de la surface de réception, ainsi que de la densité et de la viscosité du matériau. Aussi, pour un matériau donné, on s'arrange pour que la section de l'orifice de sortie soit adaptée au débit du moyen d'alimentation dont on dispose, de manière à obtenir une vitesse de sortie suffisante pour engendrer une pression dynamique.

L'action de la tête de la buse sur le matériau s'exerce par l'intermédiaire des bords de l'orifice de la buse, ce qui, combiné avec la vitesse relative du dispositif par rapport à la surface de réception, a pour effet de favoriser l'action de lissage et de mise en forme du matériau déposé. En particulier, comme on le verra par la suite, la forme du bord de l'orifice placé en aval confère à la bandelette la forme que l'on souhaite obtenir.

La pression dynamique a pour effet de faire adhérer la bandelette sur la surface de réception, mais également de repousser la tête de la buse de ladite surface. La force exercée par le moyen 3 sur la tête a pour effet de ramener la tête vers la surface. Il s'en suit que les irrégularités géométriques de la surface de réception ont une très faible influence sur le dispositif.

En effet, ces irrégularités telles que des dépressions localisées, ou encore des jonctions de produits disposés préalablement sur la surface de réception, ont seulement pour effet de faire varier la distance de l'orifice de la buse de la surface de réception, ce qui provoque une variation de la pression dynamique aussitôt compensée par l'action de la force exercée sur la tête de la buse. Ceci permet de considérer le dispositif comme auto adaptatif, et cette propriété permet d'obtenir une stabilité de la géométrie et du volume de matériau déposé remarquable, en particulier lorsque la buse est reliée à un moyen d'alimentation de type volumétrique.

En augmentant le débit d'alimentation on augmente la vitesse de sortie et, pour une force appliquée sur la tête de buse constante, on éloigne la buse de la surface de réception, ce qui a pour effet d'augmenter la section de la bandelette déposée. Lorsque le débit diminue, la tête de la buse se rapproche de la surface de réception jusqu'à ce que la pression dynamique soit équilibrée par la force exercée sur la tête de la buse, ce qui a pour effet de réduire la section de la bandelette.

On peut exploiter judicieusement cette possibilité en raison de la faible inertie de la tête de la buse et de sa forte sensibilité aux forces dynamiques. Ainsi, pour une vitesse relative donnée de la surface de réception par rapport au dispositif d'application, et en jouant sur le débit d'extrusion, on peut faire varier la section de la bandelette. Ainsi, on augmentera la section de la bandelette pour construire les zones de remplissage, et on diminuera la section de la bandelette dans les zones où une définition plus fine du profil est nécessaire, en particulier lors de la phase finale de construction du profilé.

Si on augmente la vitesse relative de la surface de réception par rapport au dispositif d'application, tout en maintenant constants le débit et la force d'application, la section de la bandelette diminue.

A débit volumétrique constant et pour une vitesse relative de la surface de réception par rapport au dispositif d'application constante, en faisant varier la force d'application à l'aide d'un moyen pilotable, on observe que l'effet de lissage conféré par les bords latéraux et par le bord longitudinal arrière 127 varie. Cet effet est particulièrement important, dans la mesure où il permet une mise en joint plus ou moins efficace de la bandelette avec les produits préalablement déposés à la surface du tambour. L'action de lissage par le bord arrière 127 remplace en quelque sorte l'action du rouleau d'application utilisé dans les procédés connus de l'art antérieur et évoqués en introduction de la présente description.

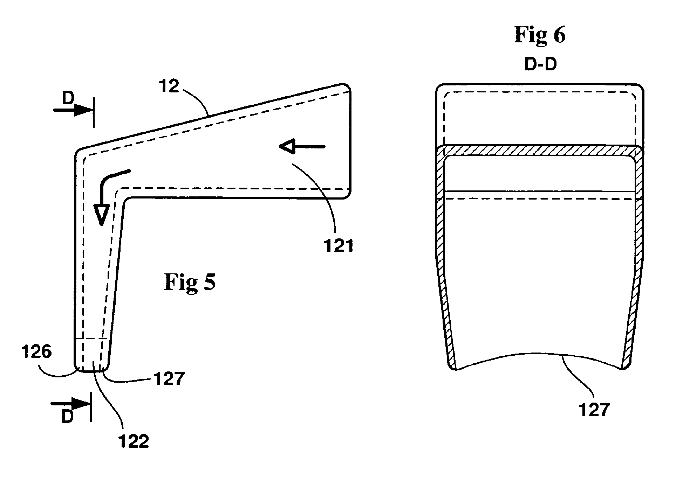

Les figures 5 et 6 illustrent une forme préférée de réalisation du profil de la sortie 122 placée à l'extrémité de la tête 12 de la buse 1, et telle que située dans le médaillon m de la figure 3. Le bord arrière 127 de l'orifice 122 a une forme concave lorsque on observe la tête 12 de la buse 1 en projection dans un plan perpendiculaire à la direction de progression R. Lorsqu'on approche la tête de la buse de la surface de réception, ce bord 127 définit, en collaboration avec la surface de réception, un profil sensiblement lenticulaire.

Le dispositif décrit ci dessus est particulièrement bien adapté pour réaliser une ébauche de pneumatique par empilage de bandelettes. Par voie de conséquence, le matériau élastomérique sera de préférence de nature caoutchoutique. La surface de réception sera constituée par l'ébauche d'un pneumatique en cours de réalisation et dont la forme est généralement cylindrique ou toroïdale.

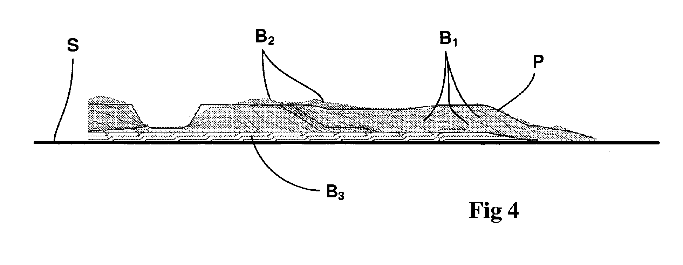

Le profilé obtenu dans ce cas particulier de mise en oeuvre du procédé, et qui s'applique à la réalisation d'un pneumatique est détaillé à la figure 4 qui représente un profilé P réalisé par le dépôt de couches successives et superposées les unes par rapport aux autres de bandelettes enroulées autour d'une surface de réception cylindrique mise en rotation. On observe qu'il est possible de réaliser plusieurs profils de bandelettes en faisant varier le débit volumétrique du moyen d'alimentation (B₁ et B₂) ou en modifiant la forme du profil du bord arrière 127 (B₃).

La bandelette B₁ est obtenue en augmentant le débit volumétrique, ce qui permet de réduire le temps de réalisation de la partie « charnue » du profilé P. En réduisant le débit volumétrique, on diminue la section de la bandelette B₂ ce qui permet de réaliser de manière plus précise le contour extérieur du profilé P.

## Revendications

1. Dispositif d'application d'une bandelette (B) d'un matériau viscoélastique sur une surface de réception (S) en mouvement relatif (R) par rapport au dit dispositif, comprenant un moyen d'alimentation et une buse d'application (1) comportant un corps (11) dans lequel débouche ledit moyen d'alimentation (2), et une tête (12) à l'extrémité de laquelle est disposé un orifice de sortie (122),
**caractérisé en ce que** la tête (12) de la buse d'application (1) est reliée au corps (11) de la buse d'application (1) par l'intermédiaire d'une articulation (10) déformable selon un axe (AA') sensiblement parallèle à la surface de réception et perpendiculaire à la direction (R) d'application de la bandelette (B).

2. Dispositif selon la revendication 1 dans lequel le conduit (121) dans lequel circule le matériau viscoélastique à l'intérieur de la tête de la buse d'application (12) est relié au conduit dans lequel circule ledit matériau à l'intérieur du corps (11) de la buse d'application (1) par un canal (120) dont l'axe se confond avec l'axe (AA') de l'articulation (10).

3. Dispositif selon la revendication 1 ou 2 dans lequel des moyens (3, 31) permettant d'exercer sur la tête de la buse (12) une force (F) dont une composante, de valeur prédéterminée, est sensiblement perpendiculaire à la surface de réception (S) au point d'application de la buse, lorsque l'orifice de sortie (122) est situé à proximité immédiate de la surface de réception (S), et fait face à ladite surface.

4. Dispositif selon la revendication 2 dans lequel les moyens (3, 31) permettant d'exercer une force (F) sur la tête (12) de la buse (1) exercent une force constante.

5. Dispositif selon la revendication 2 dans lequel les moyens (3, 31) permettant d'exercer une force (F) sur la tête (12) de la buse (1) exercent une force dont l'intensité est pilotable.

6. Dispositif d'application selon l'une des revendications 1 à 5, dans lequel le moyen d'alimentation (2) est un moyen apte à délivrer le matériau avec un débit volumétrique constant.

7. Procédé d'application d'une bandelette (B) d'un matériau (M) viscoélastique sur une surface de réception (S) dans lequel la surface de réception (S) est en mouvement relatif par rapport à un dispositif d'application selon l'une des revendications 1 à 6.

8. Procédé d'application selon la revendication 7, dans lequel on fait varier le débit d'alimentation pour faire varier la section de la bandelette (B) déposée sur la surface de réception (S).

9. Procédé d'application selon l'une des revendications 7 ou 8, dans lequel le matériau viscoélastique est du caoutchouc non vulcanisé.

10. Procédé d'application selon la revendication 9 dans lequel, la surface de réception (S) est formée par une ébauche de pneumatique en rotation.

## Claims

1. Device for applying a strip (B) of a viscoelastic material to a receiving surface (S) in relative motion (R) relative to said device, comprising a feed means and an application nozzle (1) having a body (11), into which said feed means (2) emerges, and a head (12) at the end of which there is an outlet orifice (122),
**characterized in that** the head (12) of the application nozzle (1) is linked to the body (11) of the application nozzle (1) via an articulation (10) which can be deformed along an axis (AA') roughly parallel to the receiving surface and perpendicular to the direction (R) of application of the strip (B).

2. Device according to Claim 1, in which the duct (121), in which the viscoelastic material circulates inside the head of the application nozzle (12), is linked to the duct in which said material circulates inside the body (11) of the application nozzle (1) by a channel (120), the axis of which is the same as the axis (AA') of the articulation (10).

3. Device according to Claim 1 or 2, in which means (3, 31) allow for exerting on the head of the nozzle (12) a force (F), a component of which, of predetermined value, is roughly perpendicular to the receiving surface (S) at the point of application of the nozzle, when the outlet orifice (122) is situated in immediate proximity to the receiving surface (S), and is facing said surface.

4. Device according to Claim 2, in which the means (3, 31) for exerting a force (F) on the head (12) of the nozzle (1) exert a constant force.

5. Device according to Claim 2, in which the means (3, 31) for exerting a force (F) on the head (12) of the nozzle (1) exert a force whose intensity can be controlled.

6. Application device according to one of Claims 1 to 5, in which the feed means (2) is a means able to deliver the material with a constant volumetric flow rate.

7. Method of applying a strip (B) of a viscoelastic material (M) on a receiving surface (S) in which the receiving surface (S) is in relative motion relative to an application device according to one of Claims 1 to 6.

8. Application method according to Claim 7, in which the feed flow rate is varied to vary the section of the strip (B) deposited on the receiving surface (S).

9. Application method according to one of Claims 7 or 8, in which the viscoelastic material is non-vulcanized rubber.

10. Application method according to Claim 9, in which the receiving surface (S) is formed by a rotating tyre blank.

## Patentansprüche

1. Vorrichtung zum Auftragen eines Streifens (B) eines viskoelastischen Materials auf eine Aufnahmefläche (S) in relativer Bewegung (R) bezüglich der Vorrichtung, die eine Speiseeinrichtung und eine Auftragdüse (1) enthält, die einen Körper (11), in den die Speiseeinrichtung (2) mündet, und einen Kopf (12) aufweist, an dessen Ende eine Ausgangsöffnung (122) angeordnet ist,
**dadurch gekennzeichnet, dass** der Kopf (12) der Auftragdüse (1) mit dem Körper (11) der Auftragdüse (1) über ein Gelenk (10) verbunden ist, das gemäß einer Achse (AA') im Wesentlichen parallel zur Aufnahmefläche und lotrecht zur Auftragrichtung (R) des Streifens (B) verformbar ist.

2. Vorrichtung nach Anspruch 1, bei der die Leitung (121), in der das viskoelastische Material innerhalb des Kopfes der Auftragdüse (12) fließt, mit der Leitung, in der das Material innerhalb des Körpers (11) der Auftragdüse (1) fließt, durch einen Kanal (120) verbunden ist, dessen Achse mit der Achse (AA') des Gelenks (10) zusammenfällt.

3. Vorrichtung nach Anspruch 1 oder 2, bei der Einrichtungen (3, 31) es erlauben, auf den Kopf (12) der Düse eine Kraft (F) auszuüben, von der eine Komponente mit vorbestimmtem Wert im Wesentlichen lotrecht zur Aufnahmefläche (S) am Auftragpunkt der Düse ist, wenn die Ausgangsöffnung (122) sich in direkter Nähe der Aufnahmefläche (S) befindet, und der Fläche gegenüberliegt.

4. Vorrichtung nach Anspruch 2, bei der die Einrichtungen (3, 31), die es erlauben, eine Kraft (F) auf den Kopf (12) der Düse (1) auszuüben, eine konstante Kraft ausüben.

5. Vorrichtung nach Anspruch 2, bei der die Einrichtungen (3, 31), die es erlauben, eine Kraft (F) auf den Kopf (12) der Düse (1) auszuüben, eine Kraft ausüben, deren Stärke steuerbar ist.

6. Auftragvorrichtung nach einem der Ansprüche 1 bis 5, bei der die Speiseeinrichtung (2) eine Einrichtung ist, die das Material mit einem konstanten Volumenstrom liefern kann.

7. Verfahren zum Auftragen eines Streifens (B) eines viskoelastischen Materials (M) auf eine Aufnahmefläche (S), bei dem die Aufnahmefläche (S) sich in einer relativen Bewegung bezüglich einer Auftragvorrichtung nach einem der Ansprüche 1 bis 6 befindet.

8. Auftragverfahren nach Anspruch 7, bei dem der Versorgungsstrom variiert wird, um den Querschnitt des auf die Empfangsfläche (S) aufgebrachten Streifens (B) zu variieren.

9. Auftragverfahren nach einem der Ansprüche 7 oder 8, bei dem das viskoelastische Material nicht vulkanisierter Kautschuk ist.

10. Auftragverfahren nach Anspruch 9, bei dem die Aufnahmefläche (S) von einem drehenden Luftreifen-Rohling geformt wird.
